(19) Europäisches Patentamt
European Patent Office
Office européen des brevets

(11) **EP 3 767 327 A1**

(12) **EUROPEAN PATENT APPLICATION**

(43) Date of publication:
**20.01.2021 Bulletin 2021/03**

(51) Int Cl.:
**G01S 7/491** *(2020.01)*　　**G01S 17/89** *(2020.01)*
**H04N 5/222** *(2006.01)*

(21) Application number: **19186539.3**

(22) Date of filing: **16.07.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Infineon Technologies AG**
**85579 Neubiberg (DE)**

(72) Inventors:
• **Schoenlieb, Armin**
**8054 Seiersberg-Pirka (AT)**
• **Lugitsch, David**
**8010 Graz (AT)**
• **Plank, Hannes**
**8010 Graz (AT)**

(74) Representative: **2SPL Patentanwälte PartG mbB**
**Postfach 15 17 23**
**80050 München (DE)**

(54) **METHOD AND APPARATUS FOR TIME-OF-FLIGHT SENSING**

(57)　　A method for time-of-flight sensing is provided. The method includes configuring, for capturing K raw images of a scene, an illumination element of a time-of-flight camera to illuminate the scene K times with modulated light. The illumination element gets configured to generate the modulated light for each of the K raw images based on a respective illumination signal. Each illumination signal is based on a respective illumination code, wherein at least two of the illumination codes are different from each other. Further, the method includes configuring, for capturing each of the K raw images, a light capturing element of the time-of-flight camera to measure reflected light from the scene using a respective reference signal. Each reference signal is based on a respective reference code.

## FIG. 1

EP 3 767 327 A1

## Description

### Field

The present disclosure relates to Time-of-Flight (ToF) based sensing. In particular, examples relate to a method and an apparatus for ToF sensing.

### Background

Conventional ToF based depth sensing approaches suffer from reflections of transparent objects (e.g. a cover glass of a smartphone) between the ToF camera and a target object and from reflections by strong reflectors (e.g. a traffic sign) in the observed scene. The reflected light from the target is superimposed with reflections from the transparent object or the strong reflector. The overall light signal which is measured by the sensor of the ToF camera is, hence, the sum of reflections from all objects (wanted and unwanted) in the line of sight of the respective pixel.

It is not possible in conventional indirect ToF sensing approaches to separate the reflections and to assign a respective distance to the individual objects with a reasonable amount of data.

### Summary

Hence, there may be a demand for improved ToF based sensing.

The demand may be satisfied by the subject matter of the appended claims.

An example relates to a method for ToF sensing. The method comprises configuring, for capturing K raw images of a scene, an illumination element of a ToF camera to illuminate the scene K times with modulated light. The illumination element gets configured to generate the modulated light for each of the K raw images based on a respective illumination signal. Each illumination signal is based on a respective illumination code, wherein at least two of the illumination codes are different from each other. Further, the method comprises configuring, for capturing each of the K raw images, a light capturing element of the ToF camera to measure reflected light from the scene using a respective reference signal. Each reference signal is based on a respective reference code.

Another example relates to an apparatus for ToF sensing. The apparatus comprises a processing circuit configured to configure, for capturing K raw images of a scene, an illumination element of a ToF camera to illuminate the scene K times with modulated light. The illumination element gets configured to generate the modulated light for each of the K raw images based on a respective illumination signal. Each illumination signal is based on a respective illumination code, wherein at least two of the illumination codes are different from each other. The processing circuit is further configured to configure, for capturing each of the K raw images of the scene, a light capturing element of the ToF camera to measure reflected light from the scene using a respective reference signal. Each reference signal is based on a respective reference code.

### Brief description of the Figures

Some examples of apparatuses and/or methods will be described in the following by way of example only, and with reference to the accompanying figures, in which

Fig. 1          illustrates a flowchart of an example of a method for ToF sensing;

Fig. 2          illustrates an example of a ToF measurement;

Fig. 3          illustrates an example of a scene;

Figs. 4 and 5    illustrate conventional depth images of the scene illustrated in Fig. 3;

Figs. 6 to 8    illustrate exemplary depth images of the scene illustrated in Fig. 3; and

Fig. 9          illustrates an example of an apparatus for ToF sensing.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a", "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

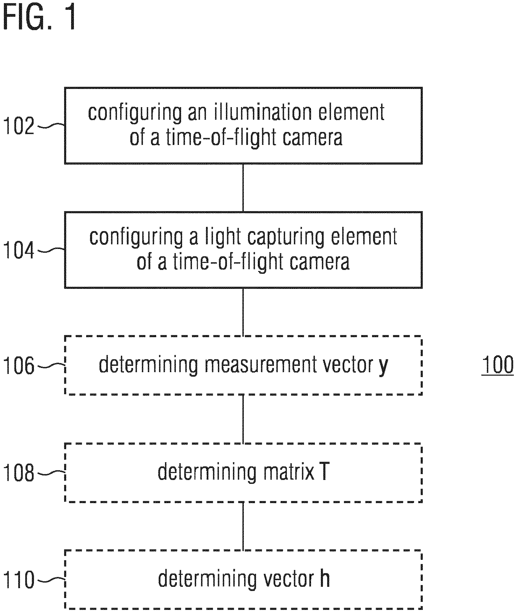

Fig. 1 illustrates a flowchart of a method 100 for ToF based sensing. Method 100 comprises configuring (adjusting, controlling) 102 an illumination element of a ToF camera to illuminate a scene K times with modulated light (e.g. infrared light) for capturing K raw images of the scene. The number K of raw images of the scene may be any number $K \geq 2$. In configuration step 102, the illumination element of the ToF camera gets configured to generate the modulated light for each of the K raw images based on a respective illumination signal. Each illumination signal is based on a respective illumination code, wherein at least two of the illumination codes are different from each other. In other words, at least two of the illumination signal signals are different from each other.

The illumination codes define the pulse sequence in the corresponding illumination signals. For example, the illumination codes may be binary codes defining the sequence of low and high pulses in the corresponding illumination signals. The illumination codes may be selected freely. By selecting respective illumination codes different illumination signals may be used for capturing the K raw images. For example, continuous wave modulated signals and/or code modulated signals may be used as illumination signals. A continuous wave modulated signal exhibits an alternating series of high and low pulses of equal duration (length), whereas a code modulated signal exhibits an alternating series of high and low pulses of varying duration (length).

The illumination element of the ToF camera generates the modulated light for the K raw images based on the respective (electric) illumination signal (e.g. by controlling one or more Light-Emitting Diodes, LEDs, or one or more laser diodes based on the illumination signal). The step of configuring 102 the illumination element of the ToF camera to illuminate the scene K times with modulated light as described above is to be understood in a way that information (data) is supplied to the ToF camera that enables (controls) the ToF camera to control the illumination element to illuminate the scene K times with modulated light according to the selected illumination codes/signals for the K raw images. For example, data indicating the selected illumination codes for the K raw images may be supplied to the ToF camera such that the ToF camera may generate the corresponding illumination signals and control the illumination element to illuminate the scene K times with modulated light based on the illumination signals. Alternatively, data indicating the illumination signals or the illumination signals itself may be supplied to the ToF camera such that the ToF camera may control the illumination element to illuminate the scene K times with modulated light based on the illumination signals.

An object in the scene that is illuminated by the modulated light reflects at least part of the modulated light back to a light capturing element (e.g. comprising optics, an image sensor and driver electronics) of the ToF camera. In other words, the light capturing element receives reflected light from the object.

For capturing each of the K raw images, method 100 further comprises configuring (adjusting) 104 the light capturing element of the ToF camera to measure reflected light from the scene using a respective reference signal. Each reference signal is based on a respective reference code. The reference codes define the pulse sequence in the corresponding reference signals. For example, the reference codes may be binary codes defining the sequence of low and high pulses in the corresponding reference signals. The reference codes may be identical to the illumination codes. Alternatively, at least one of the reference codes may be different from the illumination codes. In other words, the reference codes may be different from the illumination codes.

The image sensor of the light capturing element is pixelated and each pixel measures a fraction of the reflected light. Accordingly, measurement values based on the reflected light from the scene are generated. For example, each pixel may comprise a Photonic Mixer Device (PMD) for measuring the reflected light. The image sensor, i.e. the light capturing element, is driven by the respective reference signal. For example, the PMD of a pixel may be modulated based on (by) the respective reference signal for capturing one of the K raw images.

The step of configuring 104 the light capturing element of the ToF camera to measure the reflected light from the scene using the respective reference signal is to be understood in a way that information (data) is supplied to the ToF camera that enables the ToF camera to measure the reflected light from the scene using the respective reference signal. For example, data indicating the selected reference codes for the K raw images may be supplied to the ToF camera such that the ToF camera may generate the corresponding reference signals and supply it to the light capturing element such that the light capturing element is able to measure the reflected light from the scene using the reference signals. Alternatively, data indicating the reference signals or the reference signals itself may be supplied to the ToF camera such that the light capturing element is able to measure the reflected light from the scene using the reference signals.

Depending on the distance between the ToF camera and the object, i.e. depending on the depth, the reflected light exhibits a delay with respect to the emission of the modulated light. Similarly, the reflected light experiences a distance dependent (depth dependent) phase shift with respect to the used reference signal.

The used reference signal and the reflected light are correlated by the respective pixel in order to obtain a measurement value for each pixel. The determined measurement values are then combined to a raw image. That is, the raw image comprises a plurality of pixels each representing a corresponding measurement value.

Method 100 may allow to use arbitrary combinations (any desired combination) of illumination codes/signals and reference codes/signals for capturing the K raw images. For example, method 100 may allow to use a combination of continuous wave signals and code modulated signals for illumination the scene. Method 100 may allow to combine the advantages of continuous wave signals and code modulated (or even random) signals.

In some examples, all of the illumination codes may be different from each other. In other words, K different illumination codes and, hence, K different illumination signals may be used for capturing the K raw images. In alternative examples, the same illumination code may be used for capturing two or more of the K raw images.

Similarly, at least two of the reference codes may be different from each other. For example, all of the reference codes may be different from each other. In other words, K different reference codes and, hence, K different reference signals may be used for capturing the K raw images. In alternative examples, the same reference code may be used for capturing two or more of the K raw images.

The illumination codes and the reference codes may exhibit a same code length or different code lengths. The code length of a code is the number of symbols/digits (e.g. 0 and 1) of the code.

As described above, combinations of continuous wave signals and code modulated signals may be used for illuminating the scene. Therefore, in some examples, at least one of the illumination signals may exhibit an alternating series of high and low pulses of equal duration, whereas at least one of the illumination signals may exhibit an alternating series of high and low pulses of varying duration.

In some examples, the illumination codes and the reference codes may be pseudo-random sequences such as Kasami code sequences or m-sequences. However, the proposed technique is not limited to using pseudo-random sequences. It is to be noted that in general any desired illumination or reference code may be used.

Using a code modulated signal as described above allows to restrict a measurement range of the ToF camera to a desired (predetermined) depth (distance) range. In other words, only light reflected from an object located in the predetermined depth range causes non-zero measurement values of the ToF camera or measurement values different from a default offset value.

Apart from using arbitrary combinations of illumination codes/signals and reference codes/signals for capturing the K raw images, method 100 may allow to use a phase shift between an illumination signal and a reference signal used for capturing one of the K raw images. For example, at least one of the illumination signals may be phase shifted with respect to a corresponding one of the reference signals used by the light capturing element for measuring the reflected light from the scene while the scene is illuminated by the illumination element based on the one of the illumination signals (i.e. the phase shifted illumination signal). The phase shift between an illumination signal and a reference signal used for capturing one of the K raw images allows to restrict (adjust, configure) the measurement range of the ToF camera to a desired (predetermined) depth (distance) range (e.g. the depth range may be determined by the phase shift and the used modulation frequency for the illumination signal). In other words, only light reflected from an object which is located in the phase shift depend depth range causes non-zero measurement values of the ToF camera or measurement values different from a default offset value (i.e. a significant response).

Phase shifting the illumination signal with respect to the reference signal may be done in various ways. For example, an auxiliary illumination signal may be generated based on the corresponding illumination code, and the auxiliary illumination signal may subsequently delayed by the desired phase shift in order to achieve the phase shift between the illumination signal and the reference signal. In alternative examples, the corresponding illumination code for the illumination signal may be selected such that the resulting illumination signal is phase shifted with respect to the reference signal (e.g. the initial illumination code may be shifted/rotated).

Using the above described phase shifts and/or code modulated signals for illumination may allow to restrict (adjust, configure) a measurement range of the ToF camera to one or more desired or predefined depth (distance) ranges. Therefore, in some examples, the used illumination codes may be selected (chosen) such that the measurement range of the ToF camera is restricted to one or more desired depth ranges. For example, the illumination codes may be selected such that the ToF camera is not sensitive in a certain depth range (e.g. at a distance of a cover glass to the ToF camera).

Further, method 100 may allow for High Dynamic Range (HDR) sensing. For example, configuring 102, 104 the illumination element and the light capturing element of the ToF camera for capturing the K raw images of the scene may comprise configuring the illumination element and the light capturing element of the ToF camera to use the same illumination signal and the same reference signal for capturing two of the K raw images. Further, configuring 102, 104 the illumination element and the light capturing element of the ToF camera for capturing the K raw images of the scene may comprise configuring the ToF camera to use different exposure times for capturing the two of the K raw images. For example, the ratio of the exposure times for capturing the two of the K raw images may be ½, ¼, etc. Using HDR sensing as described above may allow to sense scenes comprising strongly reflecting objects and weakly reflecting objects. The raw image captured with the longer exposure may ensure a sufficient intensity of the weakly reflecting objects, whereas the raw image captured with the shorter exposure time may prevent pixel saturation due to the strongly reflecting objects.

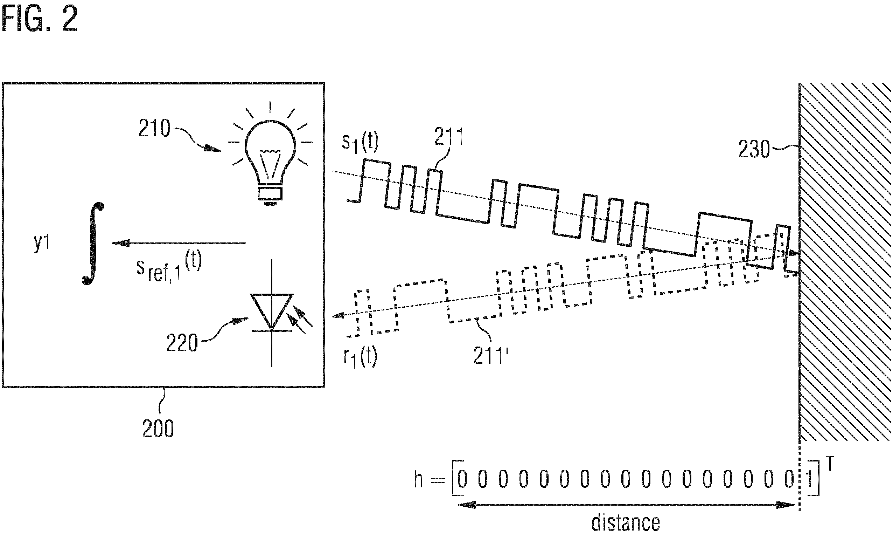

In the following, further optional steps of method 100 for processing (evaluating) the K raw images are described in connection with **Fig. 2.** Fig. 2 illustrates an exemplary ToF measurement according to method 100.

The illumination element 210 of the ToF camera 200 gets configured to illuminate the depicted scene K times with modulated light for capturing K raw images of the scene. For reasons of simplicity only the first illumination for capturing the first raw image of the K raw images is illustrated in Fig. 2. The illumination element 210 generates and emits modulated light 211 based on the illumination signal $s_1(t)$ for the first raw image. Therefore, the modulated light 211 corresponds to the illumination signal $s_1(t)$.

The modulated light 211 is reflected by an object 230 (e.g. a wall, a hand, a face, a vehicle, etc.) such that reflected light 211' is received by the light capturing element 220 of the ToF camera 200. A pixel of the light capturing element 220 measures the reflected light 211' (which may be understood as a not directly measurable receive signal $r_1(t)$) and multiplies it with the configured reference signal $s_{ref,1}(t)$ in order to obtain the measurement value $y_1$ for the reflected light 211'. For example, the light capturing element 220 may be a pixel array of PMDs.

The optical path for the modulated light 211 and the reflected light 211' is unknown and can be modelled as follows:

$$h(t) = \sum_{k=0}^{\infty} a_k \cdot \delta(t - t_k) \qquad (1),$$

with $h(t)$ denoting an impulse response function modelling the optical path, $a_k$ denoting an intensity value of the k-th reflection received from the optical path, and $\delta(t - t_k)$ denoting the Kronecker delta function.

The receive signal $r_1(t)$ representing the reflected light 211' may be understood as a modification of the illumination signal $s_1(t)$ by the optical path, i.e. the impulse response function $h(t)$.

In general, for the k-th raw image out of the K raw images, the receive signal $r_k(t)$ measured by the pixel of the illumination element 210 may be understood as a convolution of the time-flipped illumination signal $s_k(-t)$ used for driving the illumination element 210 and the impulse response function $h(t)$:

$$r_k(t) = s_k(-t) * h(t) \qquad (2)$$

The multiplication of the receive signal $r_k(t)$ with the reference $s_{ref,k}(t)$ by the light capturing element 220 leads to the measurement value $y_k$ for the reflected light 211'. It is to be noted that the light capturing element 220 may apply some error corrections such as offset error corrections, etc. Therefore, the measurement value $y_k$ for the reflected light 211' may be corrected for one or more errors according to some examples of the present disclosure.

When looking at the above relations in a fully discretized notation, the impulse response function $h(t)$ may be translated into an impulse response vector $\textbf{\textit{h}}$ exhibiting a respective non-zero entry for each reflective object present in the optical path. The index of each non-zero entry is related to a depth (position) of the reflective object with respect to the ToF camera 200. The impulse response vector $\textbf{\textit{h}}$ may be determined based on the measurement values of the light capturing element 220, the used illumination codes and the used reference codes as will be described in the following in detail. The determination of the impulse response vector $h$ will be described in the following for only a single pixel position in the K raw images. However, it is to be noted that the procedure described in the following may be applied to any desired number of pixel positions in the K raw images (e.g. for all pixel positions in the K raw images).

For the at least one pixel position in the K raw images, method 100 further comprises determining 106 a measurement vector $y$ for the pixel position based on the K raw images. The entries of the measurement vector $y$ are measurement values indicated by the respective pixels of the K raw images at the pixel position. In terms of a mathematical expression, the measurement vector $y$ for the pixel position $(x,y)$ may be written as follows:

$$y = \begin{bmatrix} y_1 \\ y_2 \\ \vdots \\ y_K \end{bmatrix} \qquad (3),$$

with $y_1$ to $y_K$ denoting the measurement values indicated by the respective pixels of the K raw images at the pixel position $(x,y)$.

Further, method 100 comprises determining 108 a matrix $T$ (also referred to as ToF matrix) based on the illumination codes and the reference codes. The matrix $T$ comprises K rows each related to one of the K raw images (i.e. one row for each of the K raw images). The entries of each of the K rows are based on the illumination code and the reference code used for capturing the raw image related to the respective row of the matrix $T$. For example, the entries of the first row of the matrix $T$ may be based on the illumination code and the reference code used for capturing the first raw image of the K raw images.

The matrix $T$ allows to map the impulse response vector $h$ to the measurement vector $y$ for the pixel position according to the following mathematical expression:

$$y = T \cdot h \cdot g + e \qquad (4),$$

with $g$ denoting a gain error of the light capturing element 210, and $e$ denoting an error vector describing an error of the measurement values $y_1$ to $y_K$ indicated by the respective pixels of the K raw images at the pixel position.

The step 108 of determining the matrix $T$ based on the K illumination codes and the K reference codes will be described in detail in the following.

Initially, the illumination codes and the reference codes are upsampled in order to increase the resolution of the ToF measurement. The relation between the desired depth resolution and the upsampling factor $M$ will be described below in detail. In order to obtain the upsampled illumination codes, the illumination codes are upsampled by consecutively repeating each digit of a respective one of the illumination codes $M$ times. Similarly, in order to obtain the upsampled reference codes, the reference codes are upsampled by consecutively repeating each digit of a respective one of the reference codes $M$ times. In other words, the illumination codes and the reference codes are upsampled in a zero-order-hold sense.

In order to illustrate the determination of the matrix $T$, a matrix notation for the illumination codes and the reference codes is used. However, it is to be noted that the matrix notation is for illustrative purposes only and that alternatively other notations may be used as well.

For example, the illumination codes may be referred to by an illumination code matrix $C_{illu}$:

$$C_{illu} = \begin{bmatrix} \cdot & \cdot & \cdot & \cdot & \cdot \\ \cdot & \cdot & \cdot & \cdot & \cdot \\ \cdot & \cdot & \cdot & \cdot & \cdot \\ \cdot & \cdot & \cdot & \cdot & \cdot \\ \cdot & \cdot & \cdot & \cdot & \cdot \end{bmatrix} = \begin{bmatrix} s_{illu,1}^T \\ \cdot \\ \cdot \\ \cdot \\ s_{illu,K}^T \end{bmatrix} \qquad (5)$$

The illumination code matrix $C_{illu}$ comprises K rows, wherein the entries of each of the K rows represent the illumination code used for capturing the raw image related to the respective row of the illumination code matrix $C_{illu}$. Given that the code length of the illumination codes is $N$, each row comprises $N$ entries. In other words, the dimension of the illumination code matrix $C_{illu}$ is $K \times N$. For example, the illumination codes used for capturing the K raw images may be written as transposed column vectors $\boldsymbol{s}_{illu,k}^T$ with $k = 1, ..., K$, wherein the entries of each transposed column vector $\boldsymbol{s}_{illu,k}^T$ are the digits of the corresponding illumination code.

The reference codes may be referred to by a reference code matrix $\boldsymbol{C}_{ref}$:

$$C_{ref} = \begin{bmatrix} \cdot & \cdot & \cdot & \cdot & \cdot \\ \cdot & \cdot & \cdot & \cdot & \cdot \\ \cdot & \cdot & \cdot & \cdot & \cdot \\ \cdot & \cdot & \cdot & \cdot & \cdot \\ \cdot & \cdot & \cdot & \cdot & \cdot \end{bmatrix} = \begin{bmatrix} \boldsymbol{s}_{ref,1}^T \\ \cdot \\ \cdot \\ \cdot \\ \boldsymbol{s}_{ref,K}^T \end{bmatrix} \qquad (6)$$

The reference code matrix $\boldsymbol{C}_{ref}$ comprises $K$ rows, wherein the entries of each of the $K$ rows represent the reference code used for capturing the raw image related to the respective row of the reference code matrix $\boldsymbol{C}_{ref}$. Given that the code length of the reference codes is $N$, each row comprises $N$ entries. In other words, the dimension of the reference code matrix $\boldsymbol{C}_{ref}$ is $K \times N$. For example, the reference codes used for capturing the K raw images may be written as transposed column vectors $\boldsymbol{s}_{ref,k}^T$ with $k = 1, ..., K$, wherein the entries of each transposed column vector $\boldsymbol{s}_{ref,k}^T$ are the digits of the corresponding reference code.

For example, the illumination codes and reference codes for a four phase ToF measurement (i.e. four 90° phase shifted raw images are captured) may be noted down as follows using the matrix notation:

$$C_{illu} = \begin{bmatrix} 1 & 1 & 0 & 0 \\ 0 & 1 & 1 & 0 \\ 0 & 0 & 1 & 1 \\ 1 & 0 & 0 & 1 \end{bmatrix} \qquad (7)$$

and

$$C_{ref} = \begin{bmatrix} 1 & 1 & 0 & 0 \\ 1 & 1 & 0 & 0 \\ 1 & 1 & 0 & 0 \\ 1 & 1 & 0 & 0 \end{bmatrix} \qquad (8)$$

By upsampling the illumination and reference codes by the upsampling factor M, the number of entries per row increases to $M \cdot N$. Accordingly, the dimension of the upsampled illumination code matrix $\boldsymbol{C}_{illu,up}$ and the upsampled reference code matrix $\boldsymbol{C}_{ref,up}$ is $K \times M \cdot N$.

For example, upsampling the illumination code matrix $\boldsymbol{C}_{illu}$ given in above mathematical expression (7) by an upsampling factor of $M = 2$ results in the following upsampled illumination code matrix $\boldsymbol{C}_{illu,up}$:

$$C_{illu,up} = \begin{bmatrix} 1 & 1 & 1 & 1 & 0 & 0 & 0 & 0 \\ 0 & 0 & 1 & 1 & 1 & 1 & 0 & 0 \\ 0 & 0 & 0 & 0 & 1 & 1 & 1 & 1 \\ 1 & 1 & 0 & 0 & 0 & 0 & 1 & 1 \end{bmatrix} \qquad (9)$$

Further, the upsampled illumination codes and the upsampled reference codes are filtered in order to emulate (mimic) the low-pass behavior of the illumination element 210 and the light capturing element 220. In other words, determining 108 the matrix *T* based on the illumination codes and the reference codes comprises filtering the upsampled illumination codes using a filter that mimics a filter characteristic of the illumination element 210 of the ToF camera 200 in order to obtain filtered and upsampled illumination codes. Further, determining 108 the matrix *T* based on the illumination codes and the reference codes comprises filtering the upsampled reference codes using a filter that mimics a filter characteristic of the light capturing element 220 of the ToF camera 200 in order to obtain filtered and upsampled reference codes. For example, Finite Impulse Response (FIR) filtering may be used for filtering the upsampled illumination and reference codes.

Using the matrix notation, a filtered and upsampled illumination code matrix $C_{illu,uf}$ is obtained:

$$C_{illu,uf} = \begin{bmatrix} s_{illu,uf,1}^T \\ \cdot \\ \cdot \\ \cdot \\ s_{illu,uf,K}^T \end{bmatrix} \quad (10),$$

wherein the filtered and upsampled illumination codes used for capturing the K raw images are written as transposed column vectors $s_{illu,uf,k}^T$ with $k = 1, ..., K.$

Further, a filtered and upsampled reference code matrix $C_{ref,uf}$ is obtained:

$$C_{ref,uf} = \begin{bmatrix} \cdot & \cdot & \cdot & \cdot & \cdot \\ \cdot & \cdot & \cdot & \cdot & \cdot \\ \cdot & \cdot & \cdot & \cdot & \cdot \\ \cdot & \cdot & \cdot & \cdot & \cdot \\ \cdot & \cdot & \cdot & \cdot & \cdot \end{bmatrix} = \begin{bmatrix} s_{ref,uf,1}^T \\ \cdot \\ \cdot \\ \cdot \\ s_{ref,uf,K}^T \end{bmatrix} \quad (11),$$

wherein the filtered and upsampled reference codes used for capturing the K raw images are written as transposed column vectors $s_{ref,uf,k}^T$ with $k = 1, ..., K.$

The matrices given in mathematical expressions (10) and (11) both exhibit the dimension $K \times M \cdot N$. Due to the filtering, the entries of the matrices are rational values between zero and one such that the behavior of the light capturing element 220 is mimicked.

The filtered and upsampled illumination codes and the filtered and upsampled reference codes are then combined to the matrix *T*.

As described above, the optical receive signal received by a pixel of the light capturing element 220 is effectively a convolution of the used illumination signal with the impulse response function of the optical path. This relation may be noted down as follows in a fully discretized notation:

$$r_k[n] = s_{illu,k}[-n] * h[n] \quad (12)$$

with $r_k[n]$ denoting the discretized receive signal, $s_{illu,k}[n]$ denoting the discretized illumination signal and $h[n]$ denoting the discretized impulse response function.

The above convolution of the illumination signal and the impulse response function may be approximated by a circular convolution of the filtered and upsampled illumination codes and the impulse response function. The circular convolution may be written as a matrix vector product with a respective circular convolution matrix $S_k$ for each of the filtered and upsampled illumination codes:

$$r_k = S_k \cdot h \quad (13)$$

Accordingly, combining the filtered and upsampled illumination codes and the filtered and upsampled reference codes to the matrix $T$ comprises determining a respective convolution matrix $S_k$ for each of the filtered and upsampled illumination codes based on the respective filtered and upsampled illumination code. The entries of each column of the respective convolution matrix $S_k$ are the digits of the related filtered and upsampled illumination code, wherein the entries of immediately succeeding columns of the respective convolution matrix $S_k$ are shifted by one position with respect to each other. The number of columns of the respective convolution matrix $S_k$ is identical to the code length of the related filtered and upsampled illumination code. In terms of a mathematical expression, the convolution matrix $S_k$ for a filtered and upsampled illumination code used for capturing the k-th raw image of the K raw images may be expressed as follows:

$$S_k = \begin{bmatrix} s_{illu,uf,k}[N \cdot M] & \cdots & s_{illu,uf,k}[N \cdot M - 1] \\ \vdots & \ddots & \vdots \\ s_{illu,uf,k}[1] & \cdots & s_{illu,uf,k}[N \cdot M] \end{bmatrix} \qquad (14)$$

That is, the dimension of the respective convolution matrix $S_k$ for each of the filtered and upsampled illumination codes is $M \cdot N \times M \cdot N$, wherein the entries of the convolution matrix $S_k$ are real values between zero and one. The respective convolution matrix $S_k$ depends on the corresponding illumination code and represents the relation between the unknown impulse response vector $h$ and the not directly measureable receive signal $r_k[n]$.

For each of the filtered and upsampled reference codes, the corresponding column vector $s_{ref,uf,k}$ with $k = 1, ..., K$ is used as reference vector $s_k$. In other words, a respective reference vector $s_k$ is determined for each of the filtered and upsampled reference codes, wherein the entries of each reference vector $s_k$ are the digits of the related filtered and upsampled reference code.

The matrix $T$ is obtained by multiplying a transposed one of each of the reference vectors $s_k$ or a transposed vector derived from one of each of the reference vectors $s_k$ with the related one of the convolution matrices $S_k$. In other words, each of the transposed reference vectors $s_k^T$ is multiplied with the related one of the convolution matrices $S_k$, or each of the transposed vectors derived from one of the reference vectors $s_k$ is multiplied with the related one of the convolution matrices $S_k$. Whether the transposed reference vector $s_k^T$ or the transposed vector derived from the reference vector $s_k$ is multiplied with the related one of the convolution matrices $S_k$ depends on the implementation of the light capturing element 220.

For example, if the light capturing element 220 of the ToF camera 200 comprises an array of PMDs each driven based on the reference signals and each comprising two charge collection capacitors $C_1$ and $C_2$, the transposed reference vector $s_k^T$ may be multiplied with the related convolution matrices $S_k$ if only charge collection capacitor $C_1$ is read out. In other examples, only charge collection capacitor $C_2$ may be read out such that the transposed vectors $(1 - s_k)^T$ derived from the related reference vectors $s_k$ may be multiplied with the convolution matrices $S_k$. 1 denotes a vector whose entries are all one and that exhibits a same vector length as the reference vectors $s_k$. If the voltage of the charge collection capacitor $C_1$ is subtracted from the voltage of the charge collection capacitor $C_2$, the transposed vectors $(1 - 2 \cdot s_k)^T$ derived from the related reference vectors $s_k$ may be multiplied with the convolution matrices $S_k$. On the other hand, if the voltage of the charge collection capacitor $C_2$ is subtracted from the voltage of the charge collection capacitor $C_1$, the transposed vectors $(2 \cdot s_k - 1)^T$ derived from the related reference vectors $s_k$ may be multiplied with the convolution matrices $S_k$. Accordingly, other transposed vectors may be derived from the related reference vectors $s_k$ depending on the implementation of the light capturing element 220 of the ToF camera 200.

The ToF matrix $T$ may, hence, be written as:

$$T = \begin{bmatrix} m_1^T \cdot S_1 \\ m_2^T \cdot S_2 \\ \vdots \\ m_K^T \cdot S_K \end{bmatrix} \qquad (15),$$

with $\boldsymbol{m}_k^T$ (for k = 1, ... ,K) denoting the related transposed reference vector $\boldsymbol{s}_k^T$ or the transposed vector derived from the related reference vector $\boldsymbol{s}_k$.

It is to be noted that the upsampling of the illumination codes and the reference codes as well as the filtering of the upsampled codes are optional and may be performed to increase the accuracy of the ToF measurement (details will be given below). In some examples, the upsampling and/or the filtering may be omitted. For example, the convolution matrices $\boldsymbol{S}_k$ may be based on the respective illumination code (which is not upsampled or filtered), the respective upsampled illumination code (which is not filtered) or the respective filtered illumination code (which is not upsampled) instead of the respective filtered and upsampled illumination code. Similarly, respective reference vectors $\boldsymbol{s}_k$ may be determined for each of the reference codes (which are not upsampled or filtered), the respective upsampled reference codes (which are not filtered) or the respective filtered reference codes (which are not upsampled) instead of the respective filtered and upsampled reference codes.

Based on mathematical expression (15), above mathematical expression (4) may be re-written as:

$$
\boldsymbol{y} = \begin{bmatrix} y_1 \\ y_2 \\ \vdots \\ y_K \end{bmatrix} = \boldsymbol{T} \cdot \boldsymbol{h} \cdot g + \boldsymbol{e} = \begin{bmatrix} \boldsymbol{m}_1^T \cdot \boldsymbol{S}_1 \\ \boldsymbol{m}_2^T \cdot \boldsymbol{S}_2 \\ \vdots \\ \boldsymbol{m}_K^T \cdot \boldsymbol{S}_K \end{bmatrix} \cdot \boldsymbol{h} \cdot g + \boldsymbol{e} \qquad (16)
$$

The rows (lines) of the ToF matrix $\boldsymbol{T}$ may be understood to represent expected measurement values for the known illumination and reference codes. In other words, the ToF matrix $\boldsymbol{T}$ may be understood as a simulation of the measurement values provided by the light capturing element 220.

If different exposure times are used for capturing the different raw images of the K raw images, the ToF matrix $\boldsymbol{T}$ may be scaled accordingly. For example, assuming HDR sensing as described above, the row of ToF matrix for the raw image with the shorter exposure time may be obtained by multiplying row the ToF matrix for the raw image with the longer exposure time by the ratio of the shorter exposure time to the longer exposure time. In general, the entries of each row of the ToF matrix may be scaled by a respective scaling factor that depends on the exposure time used for capturing the corresponding raw image.

In the above derivation of the ToF matrix $\boldsymbol{T}$, it is assumed that the K raw images are captured at substantially the same time instance - the intrinsic delay time of the ToF camera between capturing consecutive raw images of the K raw images is not taken into account. This is assumption works for a static (non-moving) ToF camera. For a dynamic (moving) ToF camera, a slight modification of the above described determination of the ToF matrix $\boldsymbol{T}$ may allow to compensate relative movement between the ToF camera and object in the sensed scene.

Data indicating a movement of the ToF camera while capturing the K raw images may be received. For example, if the ToF camera is used in a vehicle for sensing the vehicle environment, the vehicle may provide the information about the movement of the ToF camera (e.g. velocity of the vehicle). In order to compensate for the movement of the ToF camera while capturing the K raw images, part of the upsampled illumination codes and the upsampled reference codes used for capturing the K raw images are modified based on the data indicating the movement of the ToF camera and data indicating a delay time of the ToF camera between capturing consecutive raw images of the K raw images. For example, the upsampled illumination code and the upsampled reference code used for capturing the first raw image of the K raw images may remain unmodified. The upsampled illumination code and the upsampled reference code used for capturing the second raw image of the K raw images may be modified based on the data indicating the movement of the ToF camera between capturing the first and the second raw image as well data indicating the delay time between capturing the first and the second raw image. The upsampled illumination code and the upsampled reference code used for capturing the third raw image of the K raw images may be modified based on the data indicating the movement of the ToF camera between capturing the first and the third raw image as well as data indicating the delay time between capturing the first and the third raw image. The code modification may be performed in a similar manner for the other raw images of the K raw images. For example, the upsampled illumination codes and the upsampled reference codes may be shifted/rotated based on the data indicating the movement of the ToF camera and the data indicating a delay time between capturing consecutive raw images of the K raw images. Accordingly, the ToF matrix $\boldsymbol{T}$, which is now based on the modified illumination and reference codes, may be adapted to the movement of the ToF camera. In other words, the expected measurement values given by the ToF matrix $\boldsymbol{T}$ are synchronized to the movement of the ToF while capturing the consecutive raw images of the K raw images.

In order to determine the unknown objects (targets) in the scene, method 100 additionally comprises determining 110 the impulse response vector $\boldsymbol{h}$ based on the measurement vector $\boldsymbol{y}$ and the matrix $\boldsymbol{T}$ such that mathematical expression (4) or mathematical expression (16) is fulfilled. As described above, a non-zero entry of the impulse response vector **h** indicates the presence of an object in a section of the scene that is imaged at the pixel position of the K raw images. In the example indicated in Fig. 2, the object 230 is the only object in the scene such that the impulse response vector **h** comprises only one non-zero entry at an index number related to the distance of the object 230 to the ToF camera 200.

For determining the distance of the object represented by a non-zero entry of the impulse response vector **h** to the ToF camera 200, a ratio of an index number of the non-zero entry of the impulse response vector **h** and a maximum index number for an entry of the impulse response vector **h** is determined. The ratio is subsequently multiplied by an unambiguity range of the ToF camera 200 such that the distance of the object represented by the non-zero entry of the impulse response vector **h** to the ToF camera 200 is obtained.

The unambiguity range $d_{unamb}$ of the ToF camera 200 is determined by the speed of light c, the code length N of the illumination codes and the reference codes, and a modulation frequency $f_{mod}$ of the illumination signals and the reference signals. For example, the unambiguity range $d_{unamb}$ may be defined according to the following mathematical expression:

$$d_{unamb} = N \cdot \frac{c}{2 \cdot f_{mod}} \qquad (17)$$

Accordingly, the distance $d_j$ to the ToF camera 200 of an object (such as object 230 illustrated in Fig. 2) causing a non-zero entry at index number $m_j$ of the impulse response vector **h** may be determined as follows:

$$d_j = \frac{m_j}{m_{max}} \cdot d_{unamb} \qquad (18),$$

with $m_{max}$ denoting the maximum index number for an entry of the impulse response vector **h**. If upsampled codes are used, the maximum index number $m_{max}$ is equal to M · N. Therefore, mathematical expression (18) may be rewritten as follows:

$$d_j = \frac{m_j}{m_{max}} \cdot d_{unamb} = \frac{m_j \cdot c}{2 \cdot M \cdot f_{mod}} \qquad (19)$$

If a determined impulse response vector **h** comprises more than one non-zero entries, the distance may be determined for each object as described above (e.g. based on mathematical expressions (18) and (19)).

The depth resolution $\Delta d$ (i.e. the finest resolvable distance change) is related to the number of entries of the impulse response vector **h** (i.e. the maximum index number for an entry) as can be seen from the following mathematical expression:

$$\Delta d = \frac{d_{unamb}}{m_{max}} = \frac{d_{unamb}}{M \cdot N} \qquad (20)$$

As can be seen from mathematical expression (20), the depth resolution $\Delta d$ is inversely proportional to the upsampling factor M. Accordingly, the depth resolution $\Delta d$ may be adjusted by means of the upsampling factor M in the post-processing of the K raw images.

Further, the absolute value of a non-zero entry of the impulse response vector **h** allows to characterize the reflective object. The absolute value of the non-zero entry of the impulse response vector **h** indicates an intensity of the light reflected from the object that is represented by the non-zero entry of the vector **h**.

Method 100 may, according to some examples, further comprise outputting data related to objects represented by non-zero entries of the impulse response vector **h**. For examples, method 100 may comprise outputting data indicative of distances and intensities of objects represented by non-zero entries of the impulse response vector **h**. For example, the data may represent an intensity image, a greyscale image or a depth image of the scene.

While the above paragraphs mainly focused on determining the matrix **T** and evaluating the impulse response vector **h**, the following paragraphs will focus on how to determine the impulse response vector **h**.

Assuming that no noise is present in the measurement data, the above mathematical expression (4) may be simplified to:

$$y = T \cdot h \qquad (21)$$

If upsampling is not used (i.e. $M = 1$) and number K of captured raw images is equal to the code length $N \cdot M = N$, the ToF matrix $T$ is a square matrix such that an inverse matrix exists. Therefore, the impulse response vector $h$ may be determined as follows:

$$h = T^{-1} \cdot y \quad (22)$$

If the ToF matrix $T$ is not square, the pseudoinverse of the ToF matrix $T$ may be used such that the impulse response vector $h$ may be determined as follows:

$$h = (T^T \cdot T)^{-1} \cdot T^T \cdot y \qquad (23)$$

A unique solution for the impulse response vector $h$ exists if the number K of captured raw images is equal to the code length $N$ of the used illumination and reference codes.

In some examples, determining the impulse response vector $h$ based on the measurement vector y and the ToF matrix $T$ is equivalent to an ill-posed estimation problem. For determining the impulse response vector $h$ based on the measurement vector $y$ and the ToF matrix $T,$ a regularization such as a Tikhonov regularization, a Least Absolute Shrinkage and Selection Operator (LASSO) method or algorithm, or an Orthogonal Matching Pursuit (OMP) method or algorithm may be used, for example.

Another technique for determining the vector $h$ based on the measurement vector $y$ and the matrix $T$ will be described in the following.

In the proposed technique, column vectors $t_m$ are determined based on the entries of the individual columns of an updateable matrix $T_j$. The number of column vectors $t_m$ is identical to the number of columns of the matrix $T_j$. For example, the entries of the column vector $t_1$ for the first column of the updateable matrix $T_j$ are the entries of the first column of the updateable matrix $T_j$. The updateable matrix $T_j$ is initially the ToF matrix $T$. In other words, column vectors $t_m$ are extracted from the updateable matrix $T_j$. Initially, the column vectors $t_m$ are the column vectors of the ToF matrix $T$. For example, if the used illumination codes and reference codes are upsampled, the ToF matrix $T$ comprises $M \cdot N$ columns such that the updateable matrix $T_j$ comprises $M \cdot N$ columns and $M \cdot N$ column vectors $t_m$ are determined.

Subsequently, the column vector $t_{mj}$ out of the column vectors $t_m$ that exhibits the greatest, normalized inner product to the measurement vector $y$ is determined. In other words, the column vector with the best alignment to the measurement vector $y$ is searched. The normalized inner product to the measurement vector $y$ may be determined as follows:

$$m_j = \underset{m}{\mathrm{argmax}} \left\{ \frac{1}{\|y\|_2 \cdot \| t_m\|_2} \cdot y^T \cdot t_m \right\} \qquad (24)$$

The found column vector among the column vectors $t_m$ is defined as the column vector $t_{mj}$. The normalization of the inner product allows to compensate for the gain error of the light capturing element that scales the amplitude of the measurement vector $y.$

Then, an amplitude $a_j$ of the column vector $t_{mj}$ is determined. For example, the amplitude $a_j$ of the column vector $t_{mj}$ may be calculated as follows:

$$a_j = \underset{a}{\min} \left\{ y - t_{mj} \cdot a \right\} \qquad (25)$$

The amplitude $a_j$ of the column vector $t_{mj}$ is selected as non-zero entry of the impulse response vector $h$, wherein the index number of the non-zero entry of the impulse response vector $h$ is identical to a column index number of the column vector $t_{mj}$ among the column vectors $t_m$ of the matrix $T_j$. In other words, the index number of the non-zero entry $a_j$ of the impulse response vector $h$ is $m_j$.

Further, a scaling factor c for the measurement vector $y$ to minimize the difference of the scaled measurement vector $y \cdot c$ and the determined column vector $t_{mj}$ is determined. For example, the scaling factor c for the measurement vector $y$ may be calculated as follows:

$$c = \min_c \left\{ y \cdot c - t_{m_j} \right\} \qquad (26)$$

The determination of the scaling factor c is similar to the determination of the amplitude $a_j$, with the difference that here time the measurement vector $y$ is scaled. The scaling factor c is related to the amplitude $a_j$ via the reciprocal. The amplitude $a_j$ represents the intensity of the reflection causing the non-zero entry of the impulse response vector $h$. The scaling factor c is for compensating the distance dependence of the amplitude/intensity in order to enable scaling of the measurement vector $y$ such that the amplitude $a_j$ is (substantially) independent from the distance of the reflecting object to the ToF camera Due to this assumption, the amplitude of the measurement vector $y$ is comparable to the amplitudes of the columns vectors column vectors $t_m$ of the updateable matrix $T_j$.

Then, an auxiliary matrix $T_{aux,j}$ is created. The auxiliary matrix $T_{aux,j}$ comprises the same number of columns as the updateable matrix $T_j$, wherein the entries of each column of the auxiliary matrix $T_{aux,j}$ are identical to the entries of the column vector $t_{m_j}$ multiplied by the scaling factor c. In other words, each column of the auxiliary matrix $T_{aux,j}$ is identical to the product of the column vector $t_{m_j}$ and the scaling factor c:

$$T_{aux,j} = c \cdot \begin{bmatrix} \vdots & & \vdots \\ t_{m_j} & \cdots & t_{m_j} \\ \vdots & & \vdots \end{bmatrix} \qquad (27)$$

The matrix $T_j$ is further updated by adding the auxiliary matrix $T_{aux,j}$ to the matrix $T_j$. The entries of the column whose column index is identical to the column index of the column vector $t_{m_j}$ among the column vectors $t_m$ of the matrix $T_j$ are set to zero in the updated matrix $T_j$. For example, if the column index of the column vector $t_{m_j}$ is $m_j = 1$, the entries of the first column in the updated matrix $T_j$ are set to zero.

Subsequently, the index number $j$ is increased by one and the aforementioned steps for determining the vector $h$ are repeated until the index number $j = J$, wherein $J$ denotes the maximum number of considered reflections (per pixel position).

The resulting impulse response vector $h$ has $M \cdot N$ entries, wherein only the entries at the determined index numbers $m_j$ are non-zero entries.

Further, an error value for the column vector $t_{m_j}$ may be determined based on a similarity of the column vector $t_{m_j}$ to the measurement vector $y$. The error value for the column vector $t_{m_j}$ may be used to indicate the matching degree of the measurement vector $y$ and the expression $T \cdot h$. For example, a value indicating the matching degree of the measurement vector $y$ and the expression $T \cdot h$ may be determined based on the error value for the column vector $t_{m_j}$. Accordingly, the proposed method may comprise outputting data related to the value indicating the matching degree of the measurement vector $y$ and the expression $T \cdot h$. For example, the data related to the value indicating the matching degree of the measurement vector $y$ and the expression $T \cdot h$ may be a mismatch image indicating the precision of the ToF matrix $T$ w.r.t. to the image of the scene (such as a depth image).

In terms of a mathematical expression, an error between the measurement vector $y$ and the expression $T \cdot h$ may be as follows:

$$e_j = 1 - \frac{1}{\|y\|_2 \cdot \|t_m\|_2} \cdot y^T \cdot t_{m_j} \qquad (28)$$

The value indicating the matching degree of the measurement vector $y$ and the expression $T \cdot h$ may, e.g., be the error $e_j$ or a value derived therefrom. There may be J (number of reflections) error values determined per pixel. The error with greatest index j is most likely the smallest one and it represents the overall matching degree between the measurement vector y and the expression $T \cdot h$. The error value should decrease every iteration and the last one should be the overall error. If the last error is not the smallest one, this pixel should not suffer from multi-reflections and it may be better to use the solution with lower reflection number J for this pixel.

The proposed processing (evaluation) of the measurement vector $y$ for the K raw images may allow to use arbitrary combinations of continuous and code modulated signals for capturing multi-depth images. In particular, the amount of data required to address multiple reflections in a sensed scene may be reduced compared to conventional approaches. Further, multiple reflections may be separated.

It is to be noted that the above described processing is described for one pixel position. The different pixel positions in the K raw images may be evaluated separately and in parallel. For example, a different upsampling factor *M* and a different number of reflection J may be used for different pixel positions. In one example, a great oversampling factor may be used only for pixel positions where a very accurate depth resolution is needed. The other pixels may be evaluated with a low upsampling factor to reduce computational complexity. In other examples, a number of reflections J greater than 1 may be used only for pixel positions which suffer from multi-reflections (e.g. pixels at corners).

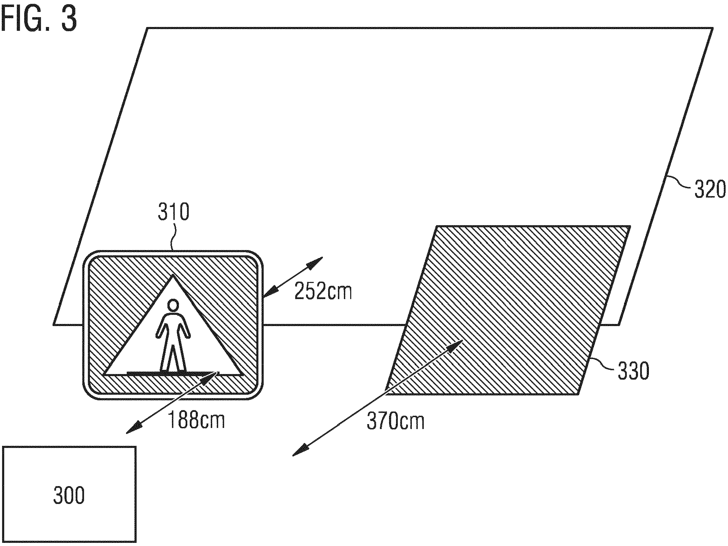

In some examples, the proposed technique may allow to remove multipath reflections of the scenery from a depth image in the post processing as will be described below with reference to Figs. 3 to 8. Further, when used for human face recognition, the proposed technique may allow to remove reflections caused by glasses worn by a human user. As a result, an image of the face without the lenses of the glasses (and only the frame of the glasses) may be obtained. Further, an intensity image obtained according to the proposed technique may allow to make objects located behind glass visible (e.g. eyes behind a glass).

Further use cases for applying the proposed technique may be removal of object glare (e.g. correction of highly reflective street signs), detection of pixel measurement errors caused by a flying pixel, removal of multi-path cover glass effects, or depth image upscaling with superior resolution (since it is possible to determine the percentage of background and foreground depth for the individual pixel positions).

In the following, an application of the proposed technique for ToF based sensing and a comparison to conventional four phase ToF sensing will be described with reference to Figs. 3 to 8. **Fig. 3** illustrates an exemplary scene sensed by a ToF camera 300. A highly reflective traffic sign 310 is placed 188 cm apart from the ToF camera 300. The traffic sign 310 is placed in front of a wall 320, which exhibts a distance of 252 cm to the traffic signal 310. That is, a distance of the ToF camera 300 to the wall 320 is 440 cm. Further, a glass plane 330 is placed next to the traffic sign 320 at a distance of 370 cm to the ToF camera.

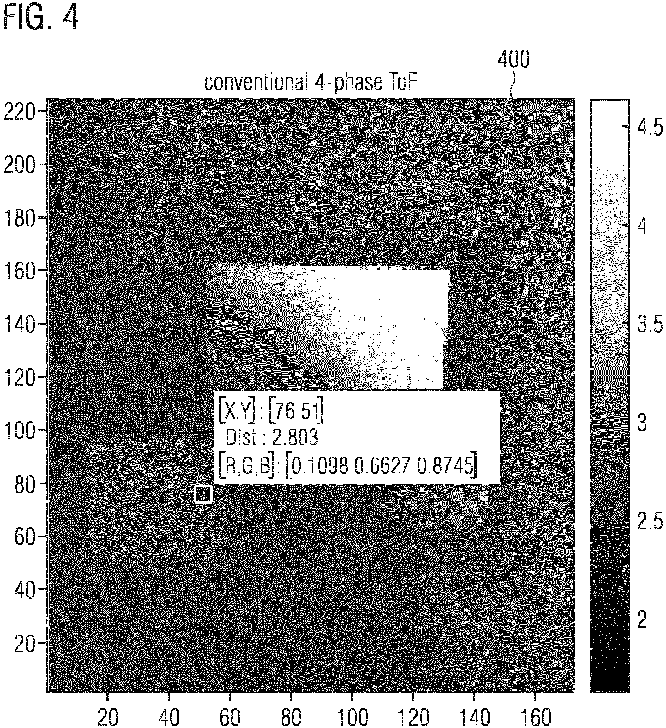

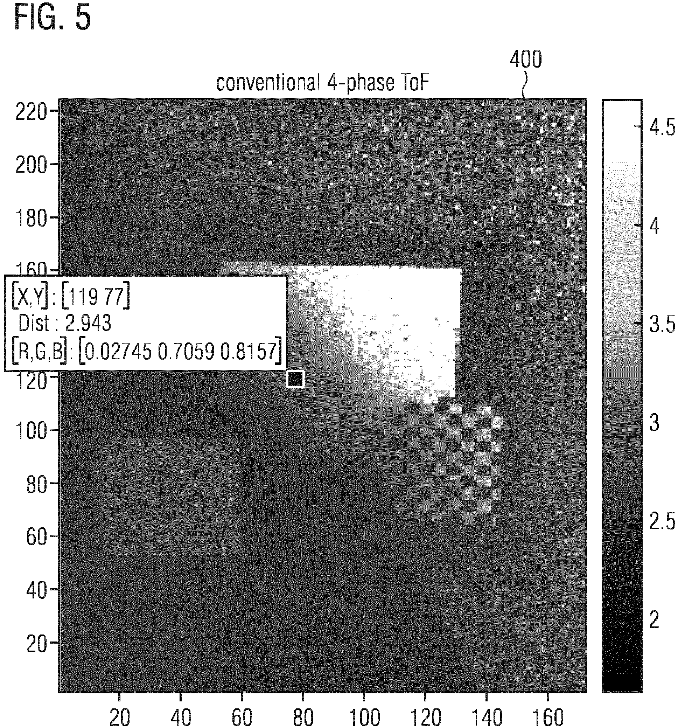

**Figs. 4 and 5** illustrate a depth image 400 of the scene illustrated in Fig. 3. The ToF camera 300 was operated and the captured raw images were processed according to conventional four phase ToF sensing for obtaining the depth image 400. In Fig. 4, the estimated distance of the traffic sign 310 to the ToF camera 300 is highlighted, and in Fig. 5 the estimated distance of the wall 320 to the ToF camera 300 is highlighted. As can be seen from Fig. 4, the distance of the traffic sign 310 to the ToF camera 300 is determined to be 280 cm. The distance of the wall 320 to the ToF camera 300 is determined to be 294 cm, as can be seen from Fig. 5.

The overall light signal which is measured by the sensor of the ToF camera 300 is the sum of reflections from all objects (wanted and unwanted) in the line of sight of the respective pixel. Since the conventional four phase ToF sensing is not able to separate the reflections and to assign a respective distance to the individual objects, the distance measurements for the traffic sign 310 and the wall 320 are not correct.

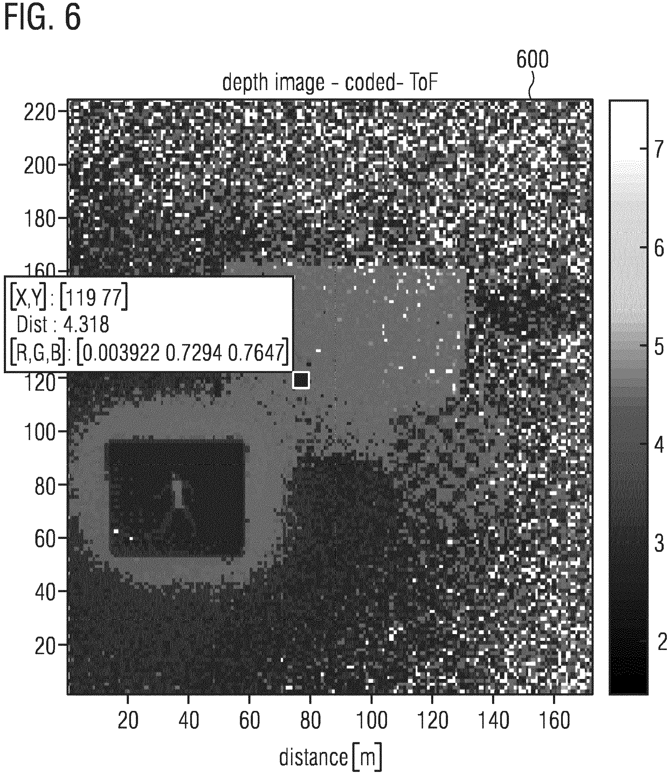

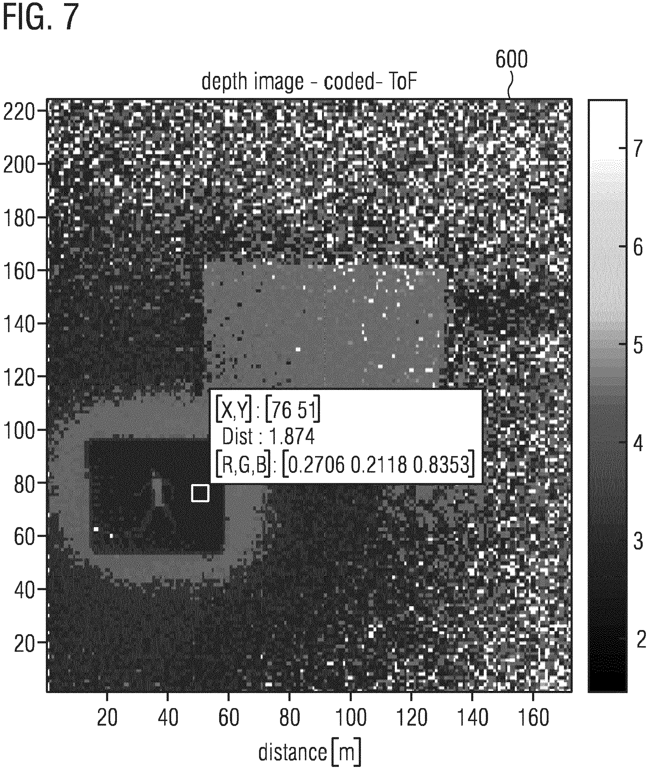

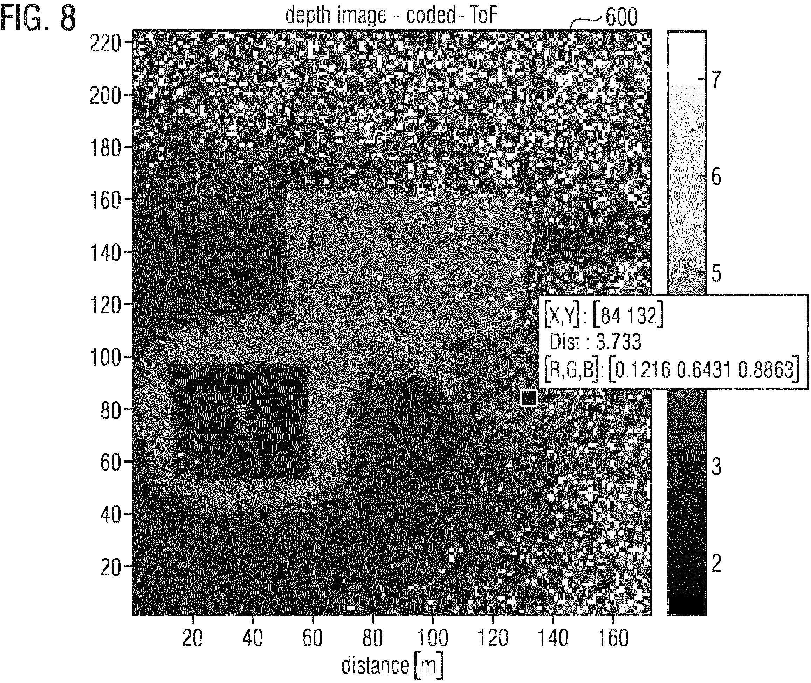

On the other hand, **Figs. 6, 7 and 8** illustrate another depth image 600 of the scene illustrated in Fig. 3. For obtaining the depth image 600, the ToF camera 300 was operated and the captured raw images were processed according to the proposed technique. In Fig. 6, the determined distance of the wall 320 to the ToF camera 300 is highlighted, in Fig. 7 the determined distance of the traffic sign 310 to the ToF camera 300 is highlighted, and in Fig. 8 the determined distance of the glass plane 330 to the ToF camera 300 is highlighted. As can be seen from Fig. 6, the distance of the wall 320 to the ToF camera 300 is determined to be 431 cm. The distance of the traffic sign 310 to the ToF camera 300 is determined to be 187 cm, as can be seen from Fig. 7. As indicated in Fig. 8, the distance of the glass plane 330 to the ToF camera 300 is determined to be 373 cm.

It is evident that the proposed technique for ToF sensing enables to separate the multiple reflections from the objects in the scene and to determine the distances to the objects with high precision.

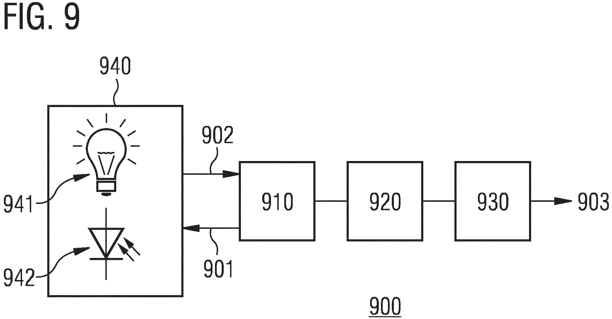

An example of an apparatus 900 for ToF sensing according to the proposed technique is further illustrated in **Fig. 9.** The apparatus 900 comprises a processing circuit 920. For example, the processing circuit 920 may be a single dedicated processor, a single shared processor, or a plurality of individual processors, some of which or all of which may be shared, a digital signal processor (DSP) hardware, an application specific integrated circuit (ASIC) or a field programmable gate array (FPGA). The processing circuit 920 may optionally be coupled to, e.g., read only memory (ROM) for storing software, random access memory (RAM) and/or non-volatile memory. The apparatus 900 may further comprise other hardware - conventional and/or custom.

The apparatus 900 comprises a first interface 910 (e.g. implemented as a hardware circuit or as a software interface) configured to supply data 901 to a ToF camera 940 for configuring an illumination element 941 and a light capturing element 942 of the ToF camera 940 according to the above described technique for ToF sensing. The data 901 for configuring the illumination element 941 and the light capturing element 942 of the ToF camera 940 are provided by the processing circuit 920.

Further, the first interface 910 is configured to receive input data 902 representing the K raw images of the scene.

The processing circuit 920 processes the input data 902 according to the above described technique for ToF sensing in order to obtain an image of the scene (e.g. a depth image, an intensity image, a greyscale image or a mismatch image). Accordingly, a second interface 930 of the apparatus 900 (e.g. implemented as a hardware circuit or as a software interface) outputs output data 903 representing the image of the scene.

For example, the functionalities of apparatus 900 may be implemented in an application processor coupled to the ToF camera 940 or be implemented in the ToF camera 940 itself.

The examples as described herein may be summarized as follows:

Some examples relate to a method for ToF sensing. The method comprises configuring, for capturing K raw images of a scene, an illumination element of a ToF camera to illuminate the scene K times with modulated light. The illumination element gets configured to generate the modulated light for each of the K raw images based on a respective illumination signal. Each illumination signal is based on a respective illumination code, wherein at least two of the illumination codes are different from each other. Further, the method comprises configuring, for capturing each of the K raw images, a light capturing element of the ToF camera to measure reflected light from the scene using a respective reference signal. Each reference signal is based on a respective reference code.

In some examples, all of the illumination codes are different from each other.

According to some examples, the illumination codes are identical to the reference codes.

In alternative examples, at least one of the illumination codes is different from the reference codes.

According to some examples, at least two of the reference codes are different from each other.

In some examples, the illumination codes and the reference codes are binary codes.

According to some examples, the illumination codes and the reference codes exhibit a same code length.

In some examples, at least one of the illumination signals is phase shifted with respect to a corresponding one of the reference signals used by the light capturing element for measuring the reflected light from the scene while the scene is illuminated by the illumination element based on the one of the illumination signals.

According to some examples, at least one of the illumination signals exhibits an alternating series of high and low pulses of equal duration and/or wherein at least one of the illumination signals exhibits an alternating series of high and low pulses of varying duration.

In some examples, the illumination codes and the reference codes are pseudo-random sequences.

According to some examples, configuring the illumination element and the light capturing element of the ToF for capturing the K raw images of the scene comprises: configuring the illumination element and the light capturing element of the ToF camera to use the same illumination signal and the same reference signal for capturing two of the K raw images; and configuring the ToF camera to use different exposure times for capturing the two of the K raw images.

In some examples, the illumination codes are selected such that a measurement range of the ToF camera is restricted to one or more desired depth ranges.

According to some examples, for at least one pixel position in the K raw images, the method further comprises: determining a measurement vector y for the pixel position based on the K raw images, wherein the entries of the measurement vector $y$ are measurement values indicated by the respective pixels of the K raw images at the pixel position; determining a matrix $T$ based on the illumination codes and the reference codes, wherein the matrix $T$ comprises K rows each related to one of the K raw images, and wherein the entries of each of the K rows are based on the illumination code and the reference code used for capturing the raw image related to the respective row of the matrix $T$; and determining a vector $h$ based on the measurement vector $y$ and the matrix $T$ that fulfills the following mathematical expression: $y = T \cdot h \cdot g + e$, with $g$ denoting a gain error of the light capturing element, and $e$ denoting an error vector describing an error of the measurement values indicated by the respective pixels of the K raw images at the pixel position.

In some examples, a non-zero entry of the vector $h$ indicates the presence of an object in a section of the scene that is imaged at the pixel position.

According to some examples, the method further comprises: determining a ratio of an index number of the non-zero entry of the vector $h$ and a maximum index number for an entry of the vector $h$; and multiplying an unambiguity range of the ToF camera with the ratio in order to determine a distance of the object represented by the non-zero entry of the vector $h$ to the ToF camera, wherein the unambiguity range of the ToF camera is determined by the speed of light, the code length of the illumination codes and the reference codes, and a modulation frequency of the illumination signals and the reference signals.

In some examples, the absolute value of the non-zero entry of the vector $h$ indicates an intensity of the light reflected from the object that is represented by the non-zero entry of the vector $h$.

According to some examples, the method further comprises outputting data related to objects represented by non-zero entries of the vector $h$.

In some examples, determining the vector $h$ based on the measurement vector $y$ and the matrix $T$ comprises: determining column vectors $t_m$ based on the entries of the individual columns of an updateable matrix $T_j$, wherein the number of column vectors $t_m$ is identical to the number of columns of the matrix $T_j$, and wherein the updateable matrix $T_j$ is initially the matrix $T$; determining the column vector $t_{m_j}$ out of the column vectors $t_m$ that exhibits the greatest, normalized inner product to the measurement vector $y$; determining an amplitude $a_j$ of the column vector $t_{m_j}$; and selecting the amplitude $a_j$ of the column vector $t_{m_j}$ as non-zero entry of the vector $h$, wherein an index number of the non-zero entry of the vector $h$ is identical to a column index number of the column vector $t_{m_j}$ among the column vectors $t_m$ of the

matrix $T_j$.

According to some examples, determining the amplitude $a_j$ of the column vector $t_{m_j}$ is calculated based on an expression which is mathematically correspondent to: $a_j = \min_{a} \left\{ \boldsymbol{y} - \boldsymbol{t}_{m_j} \cdot a \right\}$.

In some examples, determining the vector $\boldsymbol{h}$ based on the measurement vector $\boldsymbol{y}$ and the matrix $\boldsymbol{T}$ further comprises: determining a scaling factor c for the measurement vector $\boldsymbol{y}$ to minimize a difference of the scaled measurement vector $\boldsymbol{y} \cdot c$ and the column vector $\boldsymbol{t}_{m_j}$; creating an auxiliary matrix, wherein the auxiliary matrix comprises the same number of columns as the matrix $\boldsymbol{T}_j$, and wherein the entries of each column of the auxiliary matrix are identical to the entries of the column vector $\boldsymbol{t}_{m_j}$ multiplied by the scaling factor $c$; updating the matrix $\boldsymbol{T}_j$ by adding the auxiliary matrix to the matrix $\boldsymbol{T}_j$, wherein the entries of the column whose column index is identical to the column index of the column vector $\boldsymbol{t}_{m_j}$ among the column vectors $\boldsymbol{t}_m$ of the matrix $\boldsymbol{T}_j$ are set to zero in the updated matrix $\boldsymbol{T}_j$; increasing the index number $j$ by one; and repeating the aforementioned steps for determining the vector $\boldsymbol{h}$ until the index number $j = J$, wherein $J$ denotes the maximum number of considered reflections.

According to some examples, determining the scaling factor c for the measurement vector $\boldsymbol{y}$ is calculated based on an expression which is mathematically correspondent to $c = \min_{c} \left\{ \boldsymbol{y} \cdot c - \boldsymbol{t}_{m_j} \right\}$.

In some examples, determining the vector $\boldsymbol{h}$ based on the measurement vector $\boldsymbol{y}$ and the matrix $\boldsymbol{T}$ further comprises determining an error value for the column vector $\boldsymbol{t}_{m_j}$ based on a similarity of the column vector $\boldsymbol{t}_{m_j}$ to the measurement vector $\boldsymbol{y}$, and wherein the method further comprises: determining a value indicating a matching degree of the measurement vector $\boldsymbol{y}$ and the expression $\boldsymbol{T} \cdot \boldsymbol{h}$ based on the error value for the column vector $\boldsymbol{t}_{m_j}$; and outputting data related to the value indicating the matching degree of the measurement vector $\boldsymbol{y}$ and the expression $\boldsymbol{T} \cdot \boldsymbol{h}$.

According to some examples, determining the matrix $\boldsymbol{T}$ based on the illumination codes and the reference codes comprises: upsampling the illumination codes by consecutively repeating each digit of a respective one of the illumination codes M times in order to obtain upsampled illumination codes; filtering the upsampled illumination codes using a filter that mimics a filter characteristic of the illumination element of the ToF camera in order to obtain filtered and upsampled illumination codes; upsampling the reference codes by consecutively repeating each digit of a respective one of the reference codes M times in order to obtain upsampled reference codes; filtering the upsampled reference codes using a filter that mimics a filter characteristic of the light capturing element of the ToF camera in order to obtain filtered and upsampled reference codes; and combining the filtered and upsampled illumination codes and the filtered and upsampled reference codes to the matrix $\boldsymbol{T}$.

In some examples, M is selected based on a desired depth resolution.

According to some examples, combining the filtered and upsampled illumination codes and the filtered and upsampled reference codes to the matrix $\boldsymbol{T}$ comprises: determining a respective convolution matrix $\boldsymbol{S}_k$ for each of the filtered and upsampled illumination codes based on the respective filtered and upsampled illumination code, wherein the entries of each column of the respective convolution matrix $\boldsymbol{S}_k$ are the digits of the related filtered and upsampled illumination code, wherein the entries of immediately succeeding columns of the respective convolution matrix $\boldsymbol{S}_k$ are shifted by one position with respect to each other, and wherein the number of columns of the respective convolution matrix $\boldsymbol{S}_k$ is identical to the code length of the related filtered and upsampled illumination code; determining a respective reference vector $\boldsymbol{s}_k$ for each of the filtered and upsampled reference codes, wherein the entries of each reference vector $\boldsymbol{s}_k$ are the digits of the related filtered and upsampled reference code; and multiplying a transposed one of each of the reference vectors $\boldsymbol{s}_k$ or a transposed vector derived from one of each of the reference vectors $\boldsymbol{s}_k$ with the related one of the convolution matrices $\boldsymbol{S}_k$ in order to obtain the matrix $\boldsymbol{T}$.

In some examples, the light capturing element of the ToF camera comprises an array of photonic mixer devices driven based on the reference signals, and wherein the transposed vectors derived from the reference vectors $\boldsymbol{s}_k$ are calculated based on an expression which is mathematically correspondent to one of the following expressions: $(\boldsymbol{1} - 2 \cdot \boldsymbol{s}_k)^T$, $(2 \cdot \boldsymbol{s}_k - \boldsymbol{1})^T$, and $(\boldsymbol{1} - \boldsymbol{s}_k)^T$, with $\boldsymbol{1}$ denoting a vector whose entries are all one and that exhibits a same vector length as the reference vectors $\boldsymbol{s}_k$.

According to some examples, determining the matrix $\boldsymbol{T}$ based on the illumination codes and the reference codes further comprises: receiving data indicating a movement of the ToF camera while capturing the K raw images; modifying part of the upsampled illumination codes and the upsampled reference codes based on the data indicating the movement of the ToF camera and data indicating a delay time of the ToF camera between capturing consecutive raw images of the K raw images.

Other examples relate to an apparatus for ToF sensing. The apparatus comprises a processing circuit configured to configure, for capturing K raw images of a scene, an illumination element of a ToF camera to illuminate the scene K times with modulated light. The illumination element gets configured to generate the modulated light for each of the K raw images based on a respective illumination signal. Each illumination signal is based on a respective illumination code, wherein at least two of the illumination codes are different from each other. The processing circuit is further configured to configure, for capturing each of the K raw images of the scene, a light capturing element of the ToF camera to measure reflected light from the scene using a respective reference signal. Each reference signal is based on a respective reference code.

According to some examples, the apparatus further comprises an interface configured to receive the K raw images from the ToF camera. For at least one pixel position in the K raw images, the processing circuit is further configured to: determine a measurement vector $y$ for the pixel position based on the K raw images, wherein the entries of the measurement vector $y$ are the measurement values indicated by the respective pixels of the K raw images at the pixel position; determine a matrix $T$ based on the illumination codes and the reference codes, wherein the matrix $T$ comprises K rows each related to one of the K raw images, and wherein the entries of each of the K rows are based on the illumination code and the reference code used for capturing the raw image related to the respective row of the matrix $T$; and determine a vector $h$ based on the measurement vector $y$ and the matrix $T$ that fulfills the following mathematical expression: $y = T \cdot h \cdot g + e$, with $g$ denoting a gain error of the light capturing element, and $e$ denoting an error vector describing an error of the measurement values indicated by the respective pixels of the K raw images at the pixel position.

Further examples relate to another apparatus for ToF sensing. The apparatus comprises means for configuring, for capturing K raw images of a scene, an illumination element of a ToF camera to illuminate the scene K times with modulated light. The illumination element gets configured to generate the modulated light for each of the K raw images based on a respective illumination signal. Each illumination signal is based on a respective illumination code, wherein at least two of the illumination codes are different from each other. The apparatus comprises means for configuring, for capturing each of the K raw images of the scene, a light capturing element of the ToF camera to measure reflected light from the scene using a respective reference signal. Each reference signal is based on a respective reference code.

Examples relate to a non-transitory machine readable medium having stored thereon a program having a program code for performing the method for ToF sensing as described herein, when the program is executed on a processor or a programmable hardware.

Other examples relate to a program having a program code for performing the method for ToF sensing as described herein, when the program is executed on a processor or a programmable hardware.

Examples according to the proposed technique may allow to address multiple reflections with reduced data amount. Further, the proposed technique may allow for multi depth sensing with coded modulation signals and continuous wave signals.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Claims**

1. A method (100) for time-of-flight sensing, comprising:

   configuring (102), for capturing K raw images of a scene, an illumination element of a time-of-flight camera to illuminate the scene K times with modulated light, wherein the illumination element gets configured to generate the modulated light for each of the K raw images based on a respective illumination signal, wherein each illumination signal is based on a respective illumination code, and wherein at least two of the illumination codes are different from each other; and

   configuring (104), for capturing each of the K raw images, a light capturing element of the time-of-flight camera to measure reflected light from the scene using a respective reference signal, wherein each reference signal is based on a respective reference code.

2. The method of claim 1, wherein at least one of the illumination signals is phase shifted with respect to a corresponding one of the reference signals used by the light capturing element for measuring the reflected light from the scene while the scene is illuminated by the illumination element based on the one of the illumination signals.

3. The method of claim 1 or claim 2, wherein at least one of the illumination signals exhibits an alternating series of high and low pulses of equal duration and/or wherein at least one of the illumination signals exhibits an alternating series of high and low pulses of varying duration.

4. The method of any of claims 1 to 3, wherein configuring (102, 104) the illumination element and the light capturing element of the time-of-flight camera for capturing the K raw images of the scene comprises:

   configuring the illumination element and the light capturing element of the time-of-flight camera to use the same illumination signal and the same reference signal for capturing two of the K raw images; and

   configuring the time-of-flight camera to use different exposure times for capturing the two of the K raw images.

5. The method of any of claims 1 to 4, wherein the illumination codes are selected such that a measurement range of the time-of-flight camera is restricted to one or more desired depth ranges.

6. The method of any of claims 1 to 5, wherein, for at least one pixel position in the K raw images, the method further comprises:

   determining (106) a measurement vector $y$ for the pixel position based on the K raw images, wherein the entries of the measurement vector $y$ are measurement values indicated by the respective pixels of the K raw images at the pixel position;

   determining (108) a matrix $T$ based on the illumination codes and the reference codes, wherein the matrix $T$ comprises K rows each related to one of the K raw images, and wherein the entries of each of the K rows are based on the illumination code and the reference code used for capturing the raw image related to the respective row of the matrix $T$; and

   determining (110) a vector $h$ based on the measurement vector $y$ and the matrix $T$ that fulfills the following mathematical expression:

   $$y = T \cdot h \cdot g + e,$$

   with $g$ denoting a gain error of the light capturing element, and $e$ denoting an error vector describing an error of the measurement values indicated by the respective pixels of the K raw images at the pixel position.

7. The method of claim 6, wherein a non-zero entry of the vector $h$ indicates the presence of an object in a section of the scene that is imaged at the pixel position.

8. The method of claim 7, further comprising:

   determining a ratio of an index number of the non-zero entry of the vector $h$ and a maximum index number for an entry of the vector $h$; and

multiplying an unambiguity range of the time-of-flight camera with the ratio in order to determine a distance of the object represented by the non-zero entry of the vector $h$ to the time-of-flight camera, wherein the unambiguity range of the time-of-flight camera is determined by the speed of light, the code length of the illumination codes and the reference codes, and a modulation frequency of the illumination signals and the reference signals.

9. The method of any of claims 6 to 8, wherein determining (110) the vector $h$ based on the measurement vector $y$ and the matrix $T$ comprises:

determining column vectors $t_m$ based on the entries of the individual columns of an updateable matrix $T_j$, wherein the number of column vectors $t_m$ is identical to the number of columns of the matrix $T_j$, and wherein the updateable matrix $T_j$ is initially the matrix $T$;
determining the column vector $t_{mj}$ out of the column vectors $t_m$ that exhibits the greatest, normalized inner product to the measurement vector $y$;
determining an amplitude $a_j$ of the column vector $t_{mj}$; and
selecting the amplitude $a_j$ of the column vector $t_{mj}$ as non-zero entry of the vector $h$, wherein an index number of the non-zero entry of the vector $h$ is identical to a column index number of the column vector $t_{mj}$ among the column vectors $t_m$ of the matrix $T_j$.

10. The method of claim 9, wherein determining (110) the vector $h$ based on the measurement vector $y$ and the matrix $T$ further comprises:

determining a scaling factor c for the measurement vector $y$ to minimize a difference of the scaled measurement vector $y \cdot c$ and the column vector $t_{mj}$;
creating an auxiliary matrix, wherein the auxiliary matrix comprises the same number of columns as the matrix $T_j$, and wherein the entries of each column of the auxiliary matrix are identical to the entries of the column vector $t_{mj}$ multiplied by the scaling factor c;
updating the matrix $T_j$ by adding the auxiliary matrix to the matrix $T_j$, wherein the entries of the column whose column index is identical to the column index of the column vector $t_{mj}$ among the column vectors $t_m$ of the matrix $T_j$ are set to zero in the updated matrix $T_j$;
increasing the index number $j$ by one; and
repeating the aforementioned steps for determining the vector $h$ until the index number $j = J$, wherein $J$ denotes the maximum number of considered reflections.

11. The method of claim 9 or claim 10, wherein determining the vector $h$ based on the measurement vector $y$ and the matrix $T$ further comprises determining an error value for the column vector $t_{mj}$ based on a similarity of the column vector $t_{mj}$ to the measurement vector $y$, and wherein the method further comprises:

determining a value indicating a matching degree of the measurement vector $y$ and the expression $T \cdot h$ based on the error value for the column vector $t_{mj}$; and
outputting data related to the value indicating the matching degree of the measurement vector y and the expression $T \cdot h$.

12. The method of any of claims 6 to 11, wherein determining (108) the matrix $T$ based on the illumination codes and the reference codes comprises:

upsampling the illumination codes by consecutively repeating each digit of a respective one of the illumination codes M times in order to obtain upsampled illumination codes;
filtering the upsampled illumination codes using a filter that mimics a filter characteristic of the illumination element of the time-of-flight camera in order to obtain filtered and upsampled illumination codes;
upsampling the reference codes by consecutively repeating each digit of a respective one of the reference codes M times in order to obtain upsampled reference codes;
filtering the upsampled reference codes using a filter that mimics a filter characteristic of the light capturing element of the time-of-flight camera in order to obtain filtered and upsampled reference codes; and
combining the filtered and upsampled illumination codes and the filtered and upsampled reference codes to the matrix $T$.

13. The method of claim 12, wherein combining the filtered and upsampled illumination codes and the filtered and upsampled reference codes to the matrix $T$ comprises:

determining a respective convolution matrix $S_k$ for each of the filtered and upsampled illumination codes based on the respective filtered and upsampled illumination code, wherein the entries of each column of the respective convolution matrix $S_k$ are the digits of the related filtered and upsampled illumination code, wherein the entries of immediately succeeding columns of the respective convolution matrix $S_k$ are shifted by one position with respect to each other, and wherein the number of columns of the respective convolution matrix $S_k$ is identical to the code length of the related filtered and upsampled illumination code;

determining a respective reference vector $s_k$ for each of the filtered and upsampled reference codes, wherein the entries of each reference vector $s_k$ are the digits of the related filtered and upsampled reference code; and

multiplying a transposed one of each of the reference vectors $s_k$ or a transposed vector derived from one of each of the reference vectors $s_k$ with the related one of the convolution matrices $S_k$ in order to obtain the matrix $T$.

14. An apparatus (900) for time-of-flight sensing, the apparatus comprising a processing circuit (920) configured to:

configure, for capturing K raw images of a scene, an illumination element (941) of a time-of-flight camera (940) to illuminate the scene K times with modulated light, wherein the illumination element (941) gets configured to generate the modulated light for each of the K raw images based on a respective illumination signal, wherein each illumination signal is based on a respective illumination code, and wherein at least two of the illumination codes are different from each other; and

configure, for capturing each of the K raw images of the scene, a light capturing element (942) of the time-of-flight camera (940) to measure reflected light from the scene using a respective reference signal, wherein each reference signal is based on a respective reference code.

15. The apparatus of claim 14, further comprising an interface (910) configured to receive the K raw images from the time-of-flight camera (940), wherein, for at least one pixel position in the K raw images, the processing circuit (920) is further configured to:

determine a measurement vector $y$ for the pixel position based on the K raw images, wherein the entries of the measurement vector $y$ are the measurement values indicated by the respective pixels of the K raw images at the pixel position;

determine a matrix $T$ based on the illumination codes and the reference codes, wherein the matrix $T$ comprises K rows each related to one of the K raw images, and wherein the entries of each of the K rows are based on the illumination code and the reference code used for capturing the raw image related to the respective row of the matrix $T$; and

determine a vector $h$ based on the measurement vector $y$ and the matrix $T$ that fulfills the following mathematical expression:

$$y = T \cdot h \cdot g + e,$$

with $g$ denoting a gain error of the light capturing element, and $e$ denoting an error vector describing an error of the measurement values indicated by the respective pixels of the K raw images at the pixel position.

# FIG. 1

102 — configuring an illumination element of a time-of-flight camera

104 — configuring a light capturing element of a time-of-flight camera

106 — determining measurement vector **y**          <u>100</u>

108 — determining matrix T

110 — determining vector **h**

# FIG. 2

EP 3 767 327 A1

210

$s_1(t)$   211   230

$y1$ ∫ ← $s_{ref,1}(t)$

220

$r_1(t)$   211'

200

$$h = \begin{bmatrix} 0 & 0 & 0 & 0 & 0 & 0 & 0 & 0 & 0 & 0 & 0 & 0 & 0 & 0 & 0 & 0 & 0 & 0 & 1 \end{bmatrix}^T$$

distance

FIG. 3

310

252cm

188cm

300

320

330

370cm

# FIG. 4

conventional 4-phase ToF — 400

[X,Y] : [76 51]
Dist : 2.803
[R,G,B] : [0.1098 0.6627 0.8745]

# FIG. 5

conventional 4-phase ToF

[X,Y] : [119 77]
Dist : 2.943
[R,G,B] : [0.02745 0.7059 0.8157]

FIG. 6

depth image - coded- ToF

600

[X,Y] : [119 77]
Dist : 4.318
[R,G,B] : [0.003922 0.7294 0.7647]

distance [m]

# FIG. 7

depth image - coded- ToF

600

[X,Y] : [76 51]
 Dist : 1.874
[R,G,B]: [0.2706 0.2118 0.8353]

distance [m]

**FIG. 8**

depth image - coded- ToF — 600

[X,Y] : [84 132]
Dist : 3.733
[R,G,B] : [0.1216 0.6431 0.8863]

distance [m]

FIG. 9

Europäisches
Patentamt

European
Patent Office

Office européen
des brevets

**EUROPEAN SEARCH REPORT**

Application Number

EP 19 18 6539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2015/304534 A1 (KADAMBI ACHUTA [US] ET AL) 22 October 2015 (2015-10-22)<br>* abstract; figures 1-4,6-7 *<br>* paragraphs [0074], [0076] - [0086], [0118] - [0127] *<br>----- | 1-5,14<br><br>6-13,15 | INV.<br>G01S7/491<br>G01S17/89<br>H04N5/222 |
| A | US 2015/120241 A1 (KADAMBI ACHUTA [US] ET AL) 30 April 2015 (2015-04-30)<br>* abstract; figures 1,3-7 *<br>* paragraphs [0091] - [0097], [0102] - [0103] *<br>----- | 1-15 | |
| A | US 2018/106891 A1 (THURNER THOMAS [AT]) 19 April 2018 (2018-04-19)<br>* abstract; figures 1,3,4 *<br>* paragraphs [0031], [0032], [0087] *<br>----- | 1-15 | |

TECHNICAL FIELDS
SEARCHED      (IPC)

G01S
G06T
H04N

The present search report has been drawn up for all claims

| Place of search | Date of completion of the search | Examiner |
|---|---|---|
| Munich | 11 December 2019 | Cordeiro, J |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

.....................................................................................

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 19 18 6539

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2019

| Patent document cited in search report | | Publication date | Patent family member(s) | Publication date |
|---|---|---|---|---|
| US 2015304534 | A1 | 22-10-2015 | NONE | |
| US 2015120241 | A1 | 30-04-2015 | NONE | |
| US 2018106891 | A1 | 19-04-2018 | DE 102017124430 A1<br>US 2018106891 A1 | 19-04-2018<br>19-04-2018 |

EPO FORM P0459

For more details about this annex : see Official Journal of the European Patent Office, No. 12/82